# EUROPEAN PATENT APPLICATION

(11) **EP 3 588 713 A1**
(43) Date of publication of application: **01.01.2020**
(21) Application number: 18180883.3
(22) Date of filing: 29.06.2018
(51) Int. Cl.: H02G 5/10

(54) **GAS-INSULATED SWITCHGEAR HAVING A COOLING SYSTEM USING SPRAY, AND METHOD OF COOLING**

(71) Applicant: ABB Schweiz AG, 5400 Baden (CH)
(72) Inventor: Hemrle, Jaroslav, 5405 Baden-Dättwil (CH); Sologubenko, Oleksandr, 8906 Bonstetten (CH); Unternaehrer, Peter, 5436 Würenlos (CH); Kaufmann, Lilian, 5413 Birmenstorf (CH); Rocks, Jens, 8807 Freienbach (CH)
(74) Representative: Zimmermann & Partner Patentanwälte mbB

(57) **Abstract**

A gas-insulated switchgear is disclosed. The gas-insulated switchgear comprises: a housing (2) defining a housing volume (4) for holding a dielectric insulation gas, a conductor arrangement (10) arranged within the housing volume (4) and comprising a conductor section (12) to be cooled, a cooling system (20) for cooling the conductor section (12), the cooling system (20) comprising a spray generator (22) for generating a spray (30) directed at the conductor section (12), the spray (30) comprising liquid droplets of a cooling fluid suspended in the dielectric insulation gas, wherein the dielectric insulation gas is configured to be in a gaseous form at operating temperatures of -30°C and above, and wherein the cooling fluid is configured to have a boiling point of more than 70°C.

## Description

Aspects of the invention relate to a Gas-Insulated Switchgear (GIS) comprising a conductor arrangement insulated by a dielectric insulation gas. In particular, aspects of the invention relate to Gas-Insulated Switchgears having a cooling system for cooling a conductor section of the conductor arrangement by a spray comprising liquid droplets of a cooling liquid suspended in the dielectric insulation gas. Further aspects relate to a method of cooling in the gas-insulated switchgear by the cooling system, and to a use of the cooling system.

### Technical background:

Gas-Insulated Switchgear such as circuit breakers, busbars, and gas-insulated conducting lines have a conductor arrangement encapsulated by a housing containing a dielectric gas such as SF₆. This dielectric gas surrounds the conductor arrangement and allows medium voltage to be applied to the conductor arrangement without dielectric breakdown between the conductor arrangement and grounded parts such as the casing. A typical rated voltage of a medium voltage gas-insulated switchgear is at least 1 kV and at most 52 kV.

There is a need for GIS having larger power ratings and smaller footprints. Due to increased requirements both on voltage levels - increasing the insulation performance requirements - and on current ratings - increasing the resistive heat and therefore the cooling requirements - the demands on the used cooling and insulation media are becoming more severe.

A well-known highly effective cooling method is evaporative two-phase cooling. In this concept, a refrigerant boils in contact with the part to be cooled, thereby removing heat at a high rate per refrigerant mass due to the high latent heat of evaporation. However, the industry has been reluctant to use evaporative cooling in gas-insulated switchgear because of its unknown and potentially negative influence on electric breakdown strength. There has been a concern that evaporation cooling may negatively affect the dielectric performance. In particular, for evaporative cooling it would be necessary to bring a liquid phase of the refrigerant close to the conductor arrangement. However, the dielectric strength of the liquid phase is different from that of the gas phase, and the dielectric strength of a mixture of the two is poorly known and potentially insufficient. In addition, heat pipes are considered to be effective for cooling of hot spots, but heat pipes present additional components and assembly costs. Furthermore, heat pipe elements are typically electrically conductive and therefore have been considered to be incompatible with the dielectric needs of gas-insulated switchgear.

Another recent trend in GIS has been a push to replace SF₆ by alternative dielectric gases. SF₆ has very good electric insulation properties and is also a good medium for gas cooling. However, its very high global warming potential has been driving the search for more eco-friendly alternatives. Therefore, for example EP 2443632 and US 8704095 describe gas-insulated switchgear having a dielectric insulation medium comprising a fluorinated hydrocarbon as a gas component.

Thus, there exists a need in medium voltage gas-insulated switchgear for effective cooling of at least parts of the conductor assembly and of ensuring sufficient electric insulation.

### Summary of the invention

An object of the present invention is to address at least some of the above-mentioned issues at least partially. In view of the above, a gas-insulated switchgear according to claim 1, a system according to claim 14 and a method according to claim 15 are claimed.

A gas-insulated switchgear (GIS) is suggested, the GIS comprising: a housing defining a housing volume for holding a dielectric insulation gas; a conductor arrangement arranged within the housing volume and comprising a conductor section to be cooled; a cooling system for cooling the conductor section. The cooling system comprises a spray generator for generating a spray directed at the conductor section, the spray comprising liquid droplets of a cooling fluid suspended in the dielectric insulation gas, wherein the dielectric insulation gas is configured to be in a gaseous form at operating temperatures of -30°C and above, and wherein the cooling fluid is configured to have a boiling point of more than 70°C.

The combination of dielectric insulation gas and liquid droplets of a cooling fluid suspended therein provides several advantages for the cooling system. An advantage is, for example, that by generating a spray of a cooling fluid, the liquid droplets contained in the spray act as a cooling agent. When the boiling point of the cooling agent is chosen sufficiently high, for example to be 70° C or more, and a dielectric insulation gas, which may for example be SF₆, nitrogen or air, is chosen to be non-condensable under all standard operating conditions including a cold start-up, for example to be non-condensable down to about -30° C, then it can also be ensured that the overall pressure in the switch is nearly exclusively determined by the partial pressure of the dielectric insulation gas. For example, the gaseous cooling fluid has a partial pressure, at 80°C, of less than 20% of the partial pressure of the dielectric insulation gas. Further advantages, features, aspects and details that can be combined with embodiments described herein are evident from the dependent claims, claim combinations, the description and the drawings.

For example, the system may further have a full cooling fluid cycle and may include a pump (e.g. a gear pump), which depending on the fluid distribution method pumps the liquid cooling fluid from a bottom of the housing to pressures of 1 bar to 6 bar directed via conducts to the delivery points, where the cooling fluid is suspended. The delivery of the fluid to the cooled sections of the conductor may be done in form of low-pressure jets installed at the end of the conducts or by spray nozzles that distribute the spray containing the fluid in small droplets. The cooling fluid is collected on the walls of the housing and runs to the bottom to a cooling fluid reservoir, from which it is pumped again for returning to the beginning of the cycle.

The switchgear can be at least one of a switch and a busbar and can further be, for example, a Low-Voltage or Medium-Voltage switchgear having a rated voltage of at most 52 kV.

A method of cooling a gas-insulated switchgear is suggested, in particular in a gas-insulated switchgear of any embodiment of a switchgear described herein. The gas-insulated switchgear comprises a housing defining a housing volume holding a dielectric insulation gas; and a conductor arrangement arranged within the housing volume and comprising a conductor section carrying a current and being heated by the current. The method comprises: generating a spray directed at the conductor section, the spray comprising liquid droplets of a cooling fluid suspended in the dielectric insulation gas; and cooling the conductor section by the spray, wherein the cooling fluid has a boiling point of at least 70°C.

### Brief description of the Figures:

The details will be described in the following with reference to the figures, wherein
Fig. 1 is a schematic cross-sectional view of a GIS according to a first embodiment of the invention;
Fig. 2 is a schematic cross-sectional view of a GIS according to a second embodiment of the invention;
Fig. 3 is a diagram showing the results of measurements of the thermal resistance of cooling system with and without suspended droplets of cooling fluid at different currents.

### Detailed description of the Figures and of embodiments:

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations. Within the following description of the drawings, the same reference numbers refer to the same or to similar components. Generally, only the differences with respect to the individual embodiments are described. Unless specified otherwise, the description of a part or aspect in one embodiment can be applied to a corresponding part or aspect in another embodiment as well.

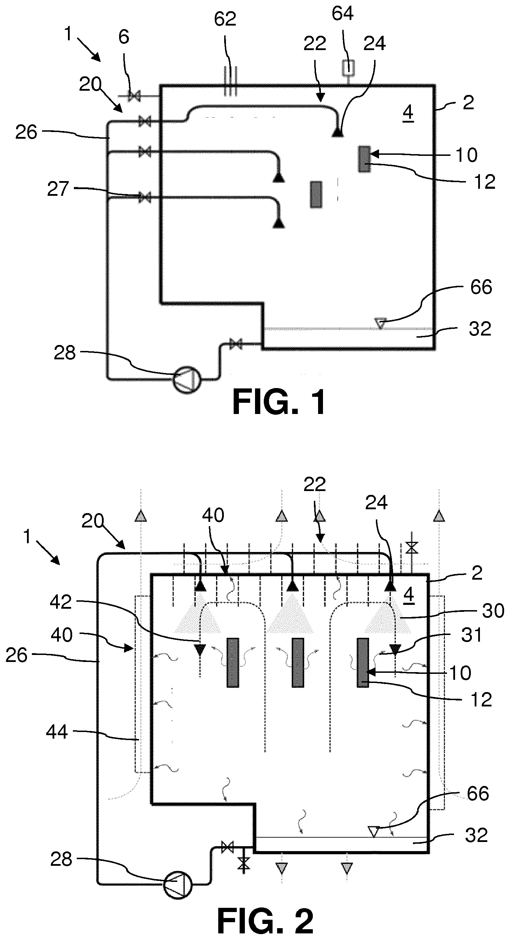

Fig. 1 is a schematic cross-sectional view of a GIS according to a first embodiment of the invention. The GIS 1 comprises a housing 2 defining a housing volume 4. The GIS 1 further comprises conductor arrangement 10 (here: a busbar) arranged within the housing volume 4 and extending in a length direction orthogonal to the image plane of Fig. 1.

For dielectrically insulating the conductor arrangement 10, the housing volume 4 is filled with a dielectric insulation gas. The pressure of the dielectric insulation gas depends on the gas and on the dielectric requirements.

The conductor arrangement 10 develops heat due to the electric current carried by the conductor arrangement 10 during operation. Therefore, at least a portion of the conductor arrangement 10 is cooled. The portion to be cooled, which may be the entire conductor arrangement 10 or a sub-part of it, is herein referred to as the conductor section 12.

For cooling the conductor section 12, the GIS 1 comprises a cooling system 20. The cooling system 20 has a spray generator 22. In this embodiment, the spray generator has a spray nozzle 24. The spray nozzle 24 generates a spray 30 of cooling liquid directed at the conductor section 12. The spray 30, described in further detail below, is constituted from liquid droplets of the cooling liquid suspended in the dielectric insulation gas.

It should be clear that referring to the cooling fluid or the cooling liquid herein is mostly identical, namely if the cooling fluid is in liquid form. However, during the cooling cycle, the cooling fluid can evaporate, especially when getting in contact with the conductor section to be cooled. In other words, when referring to the cooling liquid, it is identical to the cooling fluid in liquid form.

The cooling system 20 further comprises a cooling liquid reservoir 32 at the bottom of the housing 2, and a cooling liquid supply line 26 connecting the cooling liquid reservoir 32 to the spray nozzle 24. Further, a pump 28 and a valve system 27 are arranged in the cooling liquid supply line 26. The valve system 27 may include a separate valve for each nozzle 24 as shown in Fig. 1, or a single valve for several or all nozzles as shown in Fig. 2.

The cooling liquid provided from the cooling liquid reservoir 32 is pressed along the cooling liquid supply line 26 by the pump 28 towards the nozzles 24. The nozzle 24, described in further detail below, generates from the cooling liquid a fine spray cone, the spray having droplets of the cooling liquid, preferably with a diameter of 1 µm to 1 mm.

The spray generator 22 and in particular the spray nozzle 24 is directed such that the spray cone of the spray 30 hits the conductor section 12. The liquid droplets in the spray cone hit the hot conductor section 12 and thereby absorb heat from the conductor section 12. The heated cooling fluid subsequently flows to the housing walls and along the compartment walls to the cooling fluid reservoir 32 at the bottom of the housing 2 for accommodating the cooling fluid in liquid form. Thereby, the cycle for the cooling fluid is completed.

The cooling fluid reservoir 32 at the bottom of the housing 2 may have a volume of about 3 liters, for example. The bottom wall may be slightly tilted towards the cooling fluid reservoir 32 to collect the liquid cooling fluid.

The cooling system 20 shown in Fig. 1 thus allows the conductor sections 12 to be cooled by spray droplets created by the spray generator 22. The heat is absorbed by the liquid droplets, and is then transported to the compartment walls by a flow pattern established within the volume.

Typically, at the conductor 10 there will be locations either locally generating especially high heat fluxes (e.g. contact resistances) or that are thermally more insulated than other components (e.g. bushings cast in insulating material). Such configurations may result in hot spots. Therefore, preferably, such hot spots are designated as the conductor section 12 to be cooled, and in embodiments the spray generator 22 is especially directed to such hot spots.

In embodiments, further equipment includes a temperature sensor 62, a pressure sensor 64, a cooling liquid level sensor 66, and a dielectric gas supply valve 6. A control system (not shown) may operate the supply of the cooling liquid (via operation of the valves 27 and pump 28) and/or the supply of the dielectric gas (via supply valve 6) in dependence of the readout data obtained from the temperature sensor 62, the pressure sensor 64, and/or the cooling liquid level sensor 66. Alternatively, the valves and their control can be omitted, e.g. in case the spray generator 22 and the nozzles 24 are in constant operation.

The cooling liquid may share a component with the liquid phase of the dielectric insulation gas. The vapor and liquid phase of the cooling fluid may thus mix with other (in particular non-condensing) dielectric insulation gas components that ensure sufficient insulation at a wide range of temperatures, and in particular at low temperature conditions, when most of the cooling fluid may be condensed. Examples for the dielectric gas and the cooling fluid are discussed further below.

Fig. 2 shows another embodiment of a GIS 1 being a busbar compartment. Only differences with respect to Fig. 1 are described. In the busbar compartment 1 of Fig. 2, three conductors (busbars) 10, one for each phase, are arranged within the housing volume 4. For each busbar 10, the cooling system 20 has a respective spray generator 22 with a spray nozzle 24 directed to a conductor section (hot part) 12 of the respective busbar 10.

The GIS 1 of Fig. 2 further comprises a condenser system 40 for improving thermal takeout (dissipation) through the housing walls. The condenser system 40 has a cooler adapted for cooling the insulation gas to a temperature at which at least the evaporated cooling fluid (which is a gas component of the dielectric gas) is cooled so that it condenses into a liquid phase.

The cooler of the condenser system 40 may, for example, include passive elements such as a finned cooling surface at the top of the compartment, having fins at the inside and/or outside of the housing walls, as indicated by dashed lines on the top of the housing 2. Further, an active cooling element, e.g. for generating a forced airflow outside the housing 2 along the condenser system 40, may also be provided (not shown). In addition or alternatively, the condenser system 40 may include additional elements, such as water-cooling pads 44 or a two-phase thermosyphon arranged, e.g., on the side walls of the housing 2. The vaporized cooling fluid may flow, by natural convection (as indicated by arrows 42) to the condenser system 40 and re-condense there. The condenser system 40 may further comprise vertical natural convection channels, possibly enhanced by vertical fins, arranged on the side walls. The condensed liquid then flows along the compartment walls to the cooling liquid reservoir 32 at the bottom of the housing 2.

The cooling system 20 of Figs. 1 and 2 allows evaporation-condensation heat transfer from the busbars or other heat sources with much higher thermal efficiency than the previously known, merely convective cooling of the conductors 10. Additionally, while in natural gas cooling the heat rejection from the compartment is taking place primarily in the upper area of the compartment, efficient condensation can take place at any surface of the compartment, as long as the temperature of the compartment walls is below the saturation conditions in the compartment, for example also on the side walls or at the bottom of the compartment.

In the following, we describe further possible general aspects and variations according to the invention. Each of these aspects can be implemented in combination with any of the above-described embodiments, and/or in combination with any other aspect described herein.

### Dielectric insulation gas and cooling fluid

First, general aspects regarding the dielectric insulation gas (background gas) and the cooling fluid are described. The combination of dielectric insulation gas and cooling fluid can create a 2-phase cooling system for the switchgear.

The spray generator generates a spray directed at the conductor section. The spray comprises liquid droplets of a cooling fluid suspended in the dielectric insulation gas, wherein the dielectric insulation gas is configured to be in a gaseous form at operating temperatures of -30°C and above, and wherein the cooling fluid is configured to have a boiling point of more than 70°C.

According to an aspect, the dielectric gas can comprise a single or multiple components. For example, the dielectric insulation gas can comprise SF₆, CO₂, O₂, N₂, H₂, air, N₂O, a hydrocarbon, in particular CH₄, a perfluorinated or partially hydrogenated organofluorine compound, and mixtures of the former, wherein the organofluorine has at least 4 C atoms and at most 6 C atoms.

According to an aspect, the droplets evaporate in direct contact with hot surfaces while approaching them creating a very efficient cooling of the hot parts.

The pressure can remain in a low pressure range as describes below. Generally a cooling fluid is preferred whose saturation curve is such that within the full range of operating temperature of the switchgear a reasonable total operating pressure of the GIS is obtained. A reasonable total operating pressure is, generally, in the range from a few mbar to a few bar, for example 5 mbar to 10 bar. The total pressure results from the partial pressure of the cooling fluid together with the partial pressure of dielectric insulation gas. A preferred range of the partial pressure of the dielectric insulation gas, according to an embodiment, is about 0.7 bar to about 1.1 bar. To ensure dielectric strength across the temperature range of operation, the dielectric insulation gas is filled to pressures similar or only slightly below the typical pressures used for purely gas insulated and gas cooled devices. The total pressure limit of the dielectric insulation gas can be, for example 1.3 bar.

According to an embodiment the cooling fluid is configured to have a partial pressure, at 80°C, of less than 20% of the partial pressure of the dielectric insulation gas. Hence, the total pressure of the gases in the housing is dominated by the non-condensing insulating gas at operating temperatures of -30°C and above. Therefore, the pressure varies only in a small range.

The cooling fluid is configured to have a boiling point of more than 70°C. According to an embodiment, the boiling point of the cooling fluid can even be more than 100°C. Such fluids will exert negligible pressure at low temperatures, but on the other hand will also cause a very small pressure increase in operating, high temperature, state of the GIS.

The cooling fluid can, for example, comprises a compound having at least 7 C-atoms per molecule (C7-type), for example, a Hydrofluorether (HFE) with the formula C₇F₁₅OC₂H₅

According to an embodiment, the cooling fluid comprises a Hydrofluorether and/or a Hydrofluoroketone. Hydrofluoroethers are non-flammable, thermally stable, non-ozone depleting, and have a very low global warming potential.

Particularly, the cooling fluid can comprise Hydrofluoroether (HFE), for example, HFE7500 (boiling point: 128 °C) by Novec fluids of 3M ©. The pressure it exerts below +10 °C is below 6 mbar, and saturation pressures of 0.1 bar, 0.2 bar and 0.3 bar are reached only at temperatures above 60 °C, 78 °C and 90 °C, respectively. Alternatively, the cooling fluid can comprise HFE7300 (boiling point: 98 °C), HFE7700 (boiling point: 167 °C), or C7 (boiling point: 78 °C) or similar fluids with higher molecular weight or combinations thereof.

The dielectric strength of the dielectric insulation gas and the cooling fluid therefore shall be ensured fully by filling typical gas-insulating gases. e.g. if the total pressure limit of a device is 1.3 bar, the device can be filled to nearly 1.1 bar or 1.2 bar with a noncondensing gas, and cooling with HFE7500 can be implemented up to temperatures about 60 °C or 78 °C.

### Spray generator

Next, general aspects regarding the spray generator are discussed. The spray generator generates a spray of cooling fluid directed at the conductor section. The spray is constituted from liquid droplets of the cooling fluid suspended in the dielectric insulation gas, and is characterized in more detail further below.

The spray generator may be or may comprise one or more spray nozzles. An exemplary embodiment of a spray nozzle is a PJ type low flow nozzles, manufactured by BETE Fog Nozzle, Inc.. This type of nozzle is being used in industrial processes, fire extinguishing applications, and the like. The nozzle can contain a plate and a liquid exit line, shaped as a U and having a small exit opening directed against the plate. By directing the cooling liquid through the small exit opening against the plate, the nozzle generates from the cooling liquid a fine spray cone, the spray having droplets of the cooling liquid with a diameter of 1 µm to 1 mm. The droplet diameters can be adjusted by adjusting the size and orientation of the exit opening relative to the plate, as well as the pressure of the cooling liquid. Other nozzle designs are available, as well.

According to further embodiments, a distance of the spray generator from the conductor section to be cooled is chosen between 1 cm and 50 cm, preferably between 2 cm and 20 cm, more preferably between 5 cm and 10 cm. This distance ensures an adequate cooling and dielectric breakdown strength. To maximize the dielectric strength, the spray generator is designed to avoid sharp edges. The spray generator may also be recessed behind a dielectric shielding structure, for example by being embedded into the compartment wall surface. Also, the spray generator may be arranged so that it does not protrude further into the volume than other geometrical features of the compartment, such as cooling fins. In other words, at least one of the spray generators 22 is recessed behind a dielectric shielding structure, and/or at least one of the spray generators 22 is embedded into a wall surface of the housing 2, and/or at least one of the spray generators 22 does not protrude further into the housing volume 4 than other geometrical features of the housing 2, such as cooling fins (see e.g. Fig. 2).

Instead of a nozzle, the spray generator may also be realized by any other device generating small liquid suspended droplets, such as a nebulizer, in particular an ultrasonic nebulizer. It should be clear that advantages described herein with respect to the spray generated by nozzles also apply to spray generated in a comparable way.

According to an aspect, the conductor section to be cooled is in direct contact with the dielectric insulation gas. There is no further device for electrical insolation between the insulation gas and the section to be cooled. The section to be cooled of the conductor section can be further in direct contact with the spray, namely the insulation gas and the cooling fluid.

A remarkable advantage of embodiments of the invention can be that the spray with the cooling fluid does not necessarily diminish the dielectric strength compared to the insolation gas alone in any significant manner, and may even improve the dielectric strength.

According to an aspect, a plurality of spray generators may be provided. For example, the number of spray generators may be at least one, at least two, at least three or at least six spray generators. An upper limit may be 20 or 10 spray generators. The spray generators may be arranged in an array-like manner, e.g. as an impinging jet array.

Alternatively, there might be only one single spray generator, e.g. for thermally controlling a single hot spot, or one single spray generator for each single hot spot. In more generality, at least one spray generator is especially directed to a hot spot; and/or at least one spray generator is directed to each hot spot; and/or exactly one spray generator is directed to a sole hot spot of the gas-insulated switchgear.

The spray generators may be all the same type or may be different, e.g. for producing different sizes and/or concentrations of droplets. For example, a first spray generator may be adapted for a larger droplet size optimized for hot-spot cooling, while a second spray generator may be adapted for a smaller droplet size optimized for improving insulation in an electrically critical area.

According to an alternative aspect, the spray generator can be a nebulizer, such as an ultrasonic (e.g. piezo-electrically actuated) nebulizer adapted to create the two-phase mixture. Optionally, a fan may be provided for distributing the spray (nebulized two-phase mixture) to the conductor section to be cooled.

In case of the spray generator being a nozzle, a pump is provided for pressurizing the cooling liquid supplied to the nozzle. The pump may pressurize the cooling liquid to a pressure of, for example, 1.1 bar to 15 bar, preferably 3 bar to 10 bar. The pumping requirement for supply of the dielectric fluid is proportional to the product of the pressure before the nozzle and the volume flow rate. For a nozzle pressure of 7 bars, the power is about 1 W per each 0.1 liters/minute. A system with six such nozzles and a small membrane pump with total efficiency of 50% would thus require a power of about 12 W during operation.

In another embodiment, the spray generator can comprise a "low pressure"-nozzle, or jet, for example, a tube outlet pointed at the area where the cooling fluid should be distributed and forming a jet and/or a film on the surface. Preferably "low pressure"-nozzle may be used in specific locations in the housing where there is no concern about dielectrics.

Generally, the spray generator may include additional devices for generating, distributing and/or transporting the spray to the conductor section. For example, the spray generator may comprise a fan and/or a flow deflector for directing the flow of the spray.

In particular, the spray generator is adapted for generating the spray with the properties as further described below.

### Spray generator arrangement

Next, general aspects regarding the positioning of the spray generator are discussed.

According to an aspect, the spray generator defines a spray cone, i.e. a region emanating from the spray generator, the region being defined by the spray generator aperture and direction as the region within which the spray is directed. The spray cone need not be exactly cone-shaped, but may for example have the shape of an approximate cone or elliptic cone. The spray cone generally diverges from the spray generator in an angular manner. According to an aspect, the spray generator is directed such that the conductor section is within the spray cone (i.e. intersects or overlaps with the spray cone).

According to a further aspect, the spray generator defines a center axis, such that the spray generator directs the spray on average along the center axis. The center axis may be the axis of the spray cone mentioned above. According to an aspect, the center axis is directed towards the conductor section (i.e. intersects or overlaps with the conductor section). According to a further aspect, the center axis is directed towards the conductor section within a spatial angle of 10°, preferably of 5° (i.e. a virtual cone about the center axis, defined by the above maximum angle from the center axis, intersects with the conductor section).

According to a further aspect, the spray generator is arranged at a distance of at most 50 cm, preferably at most 30 cm, more preferably at most 20 cm, and more preferably at most 15 cm from the conductor section, for obtaining an improved cooling efficiency. According to a further aspect, the spray generator is arranged at a distance of at least 1 cm, preferably at least 2 cm from the conductor section, for obtaining a sufficient dielectric strength.

According to a further aspect, the spray generator is directed to the conductor section from such a distance that at least 20 wt%, preferably at least 30 wt% of the spray flow rate reaches the region of the conductor section in a liquid state. Then, the cooling fluid can partially evaporate by the heat of the conductor section which contributes to cooling the conductor section. According to an aspect preferably a maximum of 20 wt% of the spray flow rate impinge in a liquid state on the conductor section to be evaporated from the conductor section. According to a further aspect, the spray generator is directed to the conductor section from such a distance that the spray impinging in a liquid state on the conductor section generates a continuous liquid film covering the conductor section during operation.

According to a further aspect, the spray generator is arranged at a height above the height of the conductor section. Preferably, the spray generator is arranged vertically above the conductor section. According to an aspect, the spray generator is directed downwardly towards the conductor section.

According to a further aspect, the spray generator is recessed behind a dielectric shielding structure.

In case of a plurality of spray generators, the aspects described herein may be applicable for at least one of the spray generators, and preferably for each of the spray generators, and for the conductor section or a respective portion thereof.

### Operation parameters:

Next, operation parameters for the cooling system are discussed. Typical conditions in medium voltage switchgear result in thermal losses generated by different hot elements (e.g. busbars) at densities of about 1 kW/m³ to 10 kW/m³. The cooling system 20 and the condenser system 40 are adapted for transferring this amount of heat flux from the conductor section 12 to and across the housing walls of the GIS.

According to an embodiment, the amount of cooling liquid supplied to the spray generator can be from about 0.02 liters/minute to about 5 liters/minute per spray generator (nozzle). Typical jet nozzles such as the PJ type low flow nozzles deliver these amounts at liquid pumping pressures ranging from 2 bar to 10 bar, or even higher flow rates at higher pressures.

The position of the nozzles may be in the compartment such as to face the conductor sections to be cooled, for example, above the busbars and one nozzle near each of the six bushings of the busbars.

In practice, the flow rate may be chosen a little higher than the above estimates, as not all the spray may intercept the cooled parts, so that some of the liquid will not evaporate and will pass through the system in liquid form only. Alternatively, lower flow rates than what would correspond to the total compartment cooling requirements can also be applied, in particular in cases e.g. in which the target of the spray cooling is a singular spatially limited critical hot spot.

Thus, according to an embodiment, a cooling power of 100 W to 300 W per spray generator is provided. According to another embodiment, the cooling liquid is supplied to the spray generator at a flow rate of 0.02 1/min to 1 1/min per spray generator, preferably at a flow rate of at least 0.05 1/min and/or at most 0.5 1/min per spray generator. The piping to the spray generator is dimensioned such that the required flow can easily pass at moderate speed and pressure drop. For the flow rates stated above, a distribution tubing of 5 mm inner diameter is suitable to supply cooling liquid at the above-mentioned rates to 6 nozzles.

In a comparative example, heat is removed by passive heat transfer across the housing wall (by passive natural gas cooling on both sides of the wall). For this heat removal, a typical overall heat transfer coefficient is 5-50 W/m²K. For cooling through the top of the housing having a surface area of 0.5 m², with fins effectively tripling the effective heat exchanger surface area to 1.5 m², removal of 1500 W thus requires a large temperature difference across the housing wall of about 20-40 K or °C.

According to an embodiment of the invention, the heat transfer can be improved by condensation of the cooling fluid at the inner side of the compartment. Due to the condensation, the heat transfer coefficient is increased to about 200-2000 W/m²K (the lower limit depending on the amount of non-condensable gas which limits the cooling efficiency). Thus, removal of 1500 W is possible for a temperature difference across the housing wall of only a few K or °C, even when using smooth internal surface without fins. Because also the side walls are available for heat transfer, even without fins an effective condensation area of 1 m² - 3 m² can be assumed. The removal of the heat from the outside of the housing would usually present a larger thermal resistance similar to the comparative example. Therefore, according to an embodiment, the outside surface of the housing is enlarged, e.g. by fins, vertical walls or similar passive cooling structures, resulting in lower thermal resistance. As no particular dielectric requirements are imposed on the outside of the walls, there are no practical dielectric limitations to such cooling structures. According to a further aspect, an active or passive cooling device, such as a fan or a thermosyphon, are provided to the outside surface of the housing, for removing heat even more efficiently.

According to an aspect, the cooling system may be controlled, such as to be activated only at high thermal load situations, e.g. in response to a current passing through the conductor section exceeding a predetermined threshold, and/or a temperature measured by a temperature sensor exceeding a predetermined threshold.

The operating temperature range of this design ca be from -30°C to about 70°C, or preferable from -15° C to about 60° C, depending on the fluid selection and the pressure limits of the application. The temperatures reached at normal operation are generally lowered by the highly improved cooling.

### Characterization of the spray

In the following, general aspects characterizing the spray are discussed. The spray may also be referred to as mist, fog, or droplet suspension, all these terms denoting a mixture of liquid droplets suspended in the gas phase, and being used interchangeably herein. The spray is constituted from liquid droplets of the cooling fluid suspended in the dielectric insulation gas.

The spray may be created by flow rates of cooling fluid of about 0.01 liters/min to 1 liters/min per spray generator, preferably of at least 0.02 liters/min or 0.05 liters/min per spray generator. The spray rate is preferably at most 0.5 liters/min or at most 0.3 liters/min per spray generator.

The liquid droplets of the spray have in embodiments an average droplet diameter of at least 1 µm and of at most 1 mm. The minimum average droplet diameter is preferably at least 5 µm, and more preferably at least 10 µm. The maximum average droplet diameter is preferably at most 100 µm, and more preferably at most 50 µm.

The average droplet diameter can be determined, for example, by using a Phase Doppler Particle Analyser (PDPA) or similar system. Specifically, the droplet diameter may be measured by a PDPA at a laser wavelength of 532 nm, at a distance of 1 cm from the spray generator's orifice.

As additional trade-off, the size of droplets affects the balance between dielectric and thermal performance. Larger generated droplets intercept the cooled surface with higher kinetic energy and are therefore more readily brought into direct contact with the cooled surface. On the other hand, smaller droplets are typically more favourable from the dielectric enhancement perspective, but due to their low mass they typically evaporate before reaching the surface and their flow is more difficult to control. In practice, droplet sizes of the order of tens of micrometres, with a maximum performance at 40 µm, were found suitable from the perspectives of cooling performance, flow control and dielectric properties.

According to a further aspect, the spray has an electrical breakdown strength of at least 4 kV/mm. Unless stated otherwise, all properties of the spray are defined at 10 °C and boiling points are defined under normal pressure (1bar).

### Aspects related to the takeout of heat from the housing by the cooling system

According to embodiments, an inner housing wall surface, e.g. at the top and/or the side of the housing, is adapted for the cooling fluid to condense upon contact with the inner wall. The inner housing wall surface may comprise a condensation-enhancing structure, such as a finned cooling surface and/or a convection channel. The inner housing wall surface may comprise a condensate channel for guiding the condensate towards a cooling fluid reservoir located at a bottom portion of the housing in which cooling fluid is stored in liquid form.

According to embodiments, an outer housing wall surface, e.g. at the top and/or the side of the housing, has a cooling structure for enhancing heat removal (relative to an ordinary smooth outer wall surface). The cooling structure may comprise surface-enlarging elements, such as fins or projecting walls. According to further embodiments, the cooling structure may comprise an external two-phase cooling system, such as a thermosyphon. According to further embodiments, the cooling structure may comprise an active cooling device, such as a device for generating a forced coolant flow, e.g. a fan or a water-pipe cooling system.

### Controller:

According to a further aspect, the switchgear has a controller configured for controlling the cooling system. The switchgear can further comprise sensors, such as a temperature sensor, a pressure sensor or a cooling fluid level sensor. The controller can activate the cooling system, in particular the spray generator, if the temperature exceeds a predetermined threshold. The threshold may depend on further parameters such as pressure, transmitted power, or the like.

### Aspects related to a digital network connection of the switchgear

A switchgear system comprising a switchgear according to according to any embodiment described herein is suggested. The system further comprises a network interface for connecting the switchgear to a data network, in particular a global data network, wherein the switchgear comprises at least one of a pressure sensor, a temperature sensor, a cooling fluid level sensor and a controller for controlling the spray generator and wherein the network interface is operatively connected to the least one of the pressure sensor, the temperature sensor, the cooling fluid level sensor and the controller, and wherein the network interface is adapted to send a device status information to the data network and/or the controller is operatively connected to the network interface.

A pressure sensor, a temperature sensor and/or a cooling fluid level sensor can be used to monitor the status of the switchgear, especially the pressure and temperature inside the housing. A cooling fluid level sensor can monitor the amount of liquid cooling fluid that is available. These device status information can in particular be used to control the cooling system.

The data network may be a TCP/IP network such as Internet. The controller is operatively connected to the network interface for carrying out commands received from the data network. The commands may include a control command for controlling the spray generator to carry out a task such as "on" and "off' or "increase or decrease spray intensity" In this case, the controller is adapted for carrying out the task in response to the control command. The commands may include a status request from one or more sensors. In response to the status request, or without prior status request, the controller may be adapted for sending a status information to the network interface, and the network interface is then adapted for sending the status information over the network. The commands may include an update command including update data. In this case, the switchgear and the controller are adapted for initiating an update in response to the update command and using the update data.

According to an aspect, the data network may be an Ethernet network using TCP/IP such as LAN, WAN or Internet. The data network may comprise distributed storage units such as Cloud. Depending on the application, the Cloud can be in form of public, private, hybrid or community Cloud.

### Measurements to understand the invention

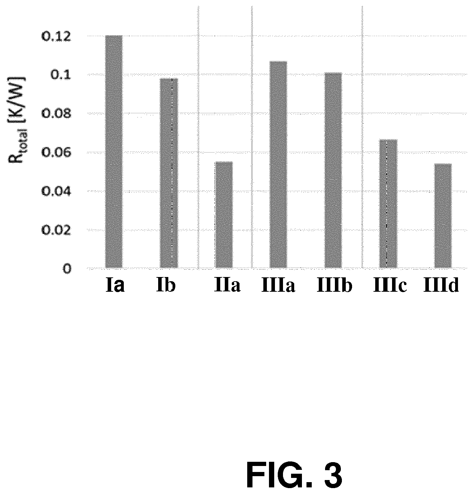

Measurements of examples to understand the invention are presented here. Results of tests comparing the two fluids are shown in Figure 3. The diagram shows the total thermal resistances Rₜₒₜₐₗ [K/W] of the cooling system based on the average busbar temperature, comparing different cooling setups with spray generator on and off and with different cooling fluids and dielectric insulation gases. In some cases the spray generator was inactive and active and different test currents between 2 kA to 4 kA are indicated.

| example | Ia | Ib | IIa | IIIa | IIIb | IIIc | IIId |
|---|---|---|---|---|---|---|---|
| insulation gas | air | air | air | air | air | air | air |
| cooling fluid | - | - | Novec 649 | HFE7500 | HFE7500 | HFE7500 | HFE7500 |
| spray | - | - | off | off | off | on | on |
| current [kA] | 2 | 2.75 | 2.75 | 2.5 | 2.75 | 2.75 | 4.0 |
| pressure [bar] | 1 | 1 | 0.6 | 0.77 | 0.77 | 0.8 | 0.8 |

The first example la, Ib includes air as a dielectric insulation gases without a cooling fluid. Second example IIa includes air and a Fluoroketone (C₆F₁₂O) Novec 649 © as a cooling fluid, which has a boiling temperature of 49 °C and is therefore not part of the invention. The third examples IIIa, IIIb, IIIc, IIId are embodiments of the invention, wherein air is used as a dielectric insulation gases and HFE7500 is used as a cooling fluid.

As shown in Figure 3 the overall thermal resistance Rₜₒₜₐₗ of the gas cooled example is about or above 0.1 K/W, while with nozzles "on" it is approximately halved. Although at the same current of 2.75 kA the thermal resistance of example 3 (IIIb, IIIc) is somewhat higher than of example IIa, example 3 (IIId) is found very suitable for currents up to 4 kA, as can be seen in the decrease of the thermal resistance.

## Claims

1. Gas-insulated switchgear (1), comprising
- a housing (2) defining a housing volume (4) for holding a dielectric insulation gas;
- a conductor arrangement (10) arranged within the housing volume (4) and comprising a conductor section (12) to be cooled;
- a cooling system (20) for cooling the conductor section (12), the cooling system (20) comprising a spray generator (22) for generating a spray (30) directed at the conductor section (12), the spray (30) comprising liquid droplets of a cooling fluid suspended in the dielectric insulation gas,
wherein the dielectric insulation gas is configured to be in a gaseous form at operating temperatures of -30°C and above, and wherein the cooling fluid is configured to have a boiling point of more than 70°C.

2. The gas-insulated switchgear of claim 1, wherein the cooling fluid is configured to have a partial pressure, at 80°C, of less than 20% of the partial pressure of the dielectric insulation gas.

3. The gas-insulated switchgear of claims 1 or 2, wherein the dielectric insulation gas has a partial pressure of about 0.7 bar to about 1.1 bar.

4. The gas-insulated switchgear according to any one of the preceding claims, wherein the cooling fluid comprises a Hydrofluorether and/or a Hydrofluoroketone.

5. The gas-insulated switchgear according to any one of the preceding claims, wherein the cooling fluid comprises a compound having at least 7 C-atoms per molecule.

6. The gas-insulated switchgear according to any one of the preceding claims, wherein the cooling fluid comprises a Hydrofluorether with the formula C₇F₁₅OC₂H₅.

7. The gas-insulated switchgear according to any one of the preceding claims, wherein the dielectric gas comprises a component selected from the group consisting of: SF₆, CO₂, O₂, N₂, H₂, air, N₂O, a hydrocarbon, in particular CH₄, a perfluorinated or partially hydrogenated organofluorine compound, and mixtures thereof; wherein the organofluorine has at least 4 C atoms and at most 6 C atoms.

8. The gas-insulated switchgear according to any one of the preceding claims, wherein the spray generator (22) is adapted for generating the spray (30) having at least one of (a) to (c):
(a) the spray (30) comprises liquid droplets having an average droplet diameter of at least 1 µm and of at most 1 mm;
(b) the spray (30) has a mass flow rate per spray generator (22) of at least 0.02 liters/min;
(c) the spray (30) has an electrical breakdown strength of at least 4 kV/mm at 10 °C.

9. The gas-insulated switchgear according to any one of the preceding claims, wherein the spray generator (22) comprises at least one of a spray nozzle (24) and a spray nebulizer.

10. The gas-insulated switchgear according to any one of the preceding claims, wherein the cooling system (20) has a cooling fluid supply line (26) coupled to the spray generator (22) for supplying bulk cooling fluid (32) to the spray generator (22).

11. The gas-insulated switchgear according to any one of the preceding claims, wherein the conductor section to be cooled is in direct contact with the dielectric insulation gas.

12. The gas-insulated switchgear according to any one of the preceding claims, wherein at least one spray generator (22) is especially directed to a hot spot; and/or at least one spray generator (22) is directed to each hot spot; and/or exactly one spray generator (22) is directed to a sole hot spot of the gas-insulated switchgear.

13. The gas-insulated switchgear according to any one of the preceding claims, being at least one of a switch and a busbar; and/or being a Low-Voltage switchgear or Medium-Voltage switchgear having a rated voltage of at most 52 kV.

14. A switchgear system comprising a gas-insulated switchgear according to any one of the preceding claims and a network interface for connecting the switchgear to a data network, wherein the switchgear comprises at least one of: a pressure sensor, a temperature sensor, a cooling fluid level sensor, and a controller for controlling the spray generator; wherein the network interface is operatively connected to the least one of the pressure sensor, the temperature sensor, the cooling fluid level sensor and the controller, and wherein the network interface is adapted to send a device status information to the data network and/or the controller is operatively connected to the network interface.

15. Method of cooling in a gas-insulated switchgear (1), in particular in a gas-insulated switchgear (1) of any one of the claims 1 to 13, the gas-insulated switchgear (1) comprising a housing (2) defining a housing volume (4) holding a dielectric insulation gas; and a conductor arrangement (10) arranged within the housing volume (4) and comprising a conductor section (12) carrying a current and being heated by the current,
the method comprising:
generating a spray (30) directed at the conductor section (12), the spray comprising liquid droplets of a cooling fluid suspended in the dielectric insulation gas, and
cooling the conductor section (12) by the spray (30),
wherein the cooling fluid has a boiling point of at least 70°C.
